# FASCICULE DE BREVET EUROPEEN

(11) **EP 0 817 760 B1**
(45) Date de publication et mention de la délivrance du brevet: **29.12.1999**
(21) Numéro de dépôt: 96911006.3
(22) Date de dépôt: 29.03.1996
(51) Int. Cl.: C02F 11/14, C02F 1/50

(54) **PROCEDE DE STABILISATION DE BOUES**
VERFAHREN ZUR STABILISIERUNG VON SCHLAMM
SLUDGE DIGESTION METHOD

(30) Priorité: 31.03.1995 FR 9504073
(43) Date de publication de la demande: 14.01.1998
(73) Titulaire: OTV Omnium de Traitements et de Valorisation, 94417 St Maurice Cédex (FR)
(72) Inventeur: BONNIN, Christophe, F-94430 Chennevières-sur-Marne (FR); CORITON, Gabriel, F-93150 Blanc-Mesnil (FR)
(74) Mandataire: Vidon, Patrice
(86) Numéro de dépôt international: FR9600484
(87) Numéro de publication internationale: WO9630311

(56) Documents cités:
- WO-A-94/19287
- WO-A-95/04706
- FR-A- 2 524 459
- FR-A- 2 709 304
- US-A- 4 681 687
- DATABASE WPI Week 8515 Derwent Publications Ltd., London, GB; AN 85-089562 XP002010092 & JP,A,60 038 100 (DAIICHI KOGYO SEIYAKU) , 27 Février 1985

## Description

L'invention concerne le domaine du traitement des boues fortement chargées en matières organiques fermentescibles et notamment des boues issues des processus de dépollution des eaux usées urbaines ou industrielles, des processus de production d'eau potable à partir d'eau de surface ou souterraine ou bien encore des boues issues des opérations de curage des réseaux. L'invention s'applique également au traitement d'autres déchets de station d'épuration tels que les refus de dégrillage, les graisses et les sables.

Plus précisément, l'invention concerne un procédé permettant de stabiliser de telles boues ou de tels déchets c'est-à-dire notamment de les désodoriser et de les hygiéniser.

En France, la quantité de boues produites par les stations d'épuration et les stations de potabilisation est de plus d'un million de tonnes de matières sèches par an. Environ, la moitié de ces boues est valorisée dans le domaine agricole tandis que 35 % sont stockés dans les décharges. La production de ces boues étant de plus en plus importante, il est nécessaire que celles-ci ne présentent pas de danger pour l'environnement et la santé humaine. En effet, ces boues contiennent des germes dont certains sont pathogènes (bactéries coliformes, salmonelles, oeufs d'helminthes,....). De plus, elles sont très fermentescibles et sont à l'origine de la production de gaz (amines, sulfure d'hydrogène, mercaptans) qui engendrent des nuisances olfactives.

Ces considérations expliquent la nécessité de mettre en oeuvre, sur les filières de traitement indiquées ci-dessus, au moins une étape de stabilisation de ces boues visant à obtenir des boues n'évoluant plus ou, à tout le moins, évoluant peu rapidement, tant sur le plan biologique que sur le plan physico-chimique.

Ces boues sont constituées d'une partie soluble et de matière sèche. Cette matière sèche comprend environ 30% de composés minéraux et environ 70% de matière organique dite "volatile". Classiquement, le principal objectif des traitements de stabilisation de ces boues est notamment de diminuer leur pouvoir fermentescible en oxydant la matière organique de façon à rendre celle-ci plus facilement bio-assimilable ou en éliminant les germes réducteurs responsables de la fermentation.

Comme précisé ci-dessus, les traitements de stabilisation des boues ont, en outre, pour objet de répondre à deux objectifs principaux :
- l'hygiénisation de la boue par réduction du nombre de germes potentiellement pathogènes ;
- la désodorisation de la boue par réduction de son pouvoir fermentescible, c'est à dire par la réduction du nombre des bactéries réductrices (notamment les germes sulfato-réducteurs) et/ou par réduction de la concentration en matières organiques.

Par ailleurs, l'étape de stabilisation doit, pour des raisons de coûts d'exploitation, altérer le moins possible l'aptitude à la déshydratabilité des boues. Ce paramètre influe en effet directement sur la consommation en polymères nécessaires lors du traitement de ces boues pour les valoriser ou les mettre en décharge.

Il existe dans l'état de la technique de nombreux procédés de stabilisation de telles boues. Ces procédés peuvent être classés essentiellement comme suit :
- la digestion aérobie,
- la digestion anaérobie,
- le conditionnement chimique,
- le conditionnement thermique.

Plus récemment, deux nouveaux procédés ont été étudiés, mais n'ont pas encore fait l'objet, à la date de dépôt de la présente demande de brevet, d'un développement industriel bien établi.
- il s'agit d'une par du procédé de stabilisation connu par l'homme de l'art sous le nom de procédé SYNOX,
- et d'autre part d'un procédé de stabilisation par les oxydes d'azote gazeux.

Tous ces procédés s'appliquent sur des boues présentant une concentration relativement forte en matière sèche, fréquemment entre 50 et 100 g/l. Ceci impose donc que les boues soient soumises à un prétraitement d'épaississement, généralement par décantation ou flottation. Les stations de traitement doivent donc être conçues avec des ouvrages dimensionnés pour permettre des temps de contact minimum de 24 heures.

La digestion aérobie permet d'obtenir une réduction de la concentration en matière organique et consiste en une aération prolongée des boues de façon à poursuivre le développement des microorganismes aérobies qu'elles renferment jusqu'à épuisement de substrat constitué par la matière organique présente afin de réaliser l'auto-oxydation de ces microorganismes.

L'opération de stabilisation aérobie peut être effectuée à 30-40°C (stabilisation mésophile) ou bien à 45-60°C (stabilisation thermophile). Dans ce dernier cas, l'augmentation de température permet une hygiénisation partielle de la boue.

Le temps de séjour des boues dans les réacteurs de stabilisation aérobie sont généralement de l'ordre de 10 à 15 jours, ce qui permet de conduire à une élimination de 30 à 40% de la matière organique, à une élimination de 90 à 96 % de l'émission de matières soufrées et à un abattement supérieur à 2 log des germes fécaux. Lorsque les ouvrages où a lieu cette stabilisation aérobie sont couverts et isolés, la dégradation de la matière organique provoque une augmentation de la température, ce qui accélère le processus de digestion. Le temps de séjour peut ainsi être diminué de moitié et abaissé jusqu'à 5 à 6 jours.

L'opération de stabilisation anaérobie consiste à dégrader la matière organique par des bactéries anaérobies strictes dans des conditions d'environnement précises (potentiel redox proche de -250 mV, pH neutre) jusqu'à la formation de méthane. La méthanisation de la matière organique peut avoir lieu dans des conditions de température ambiante, mésophiles ou thermophiles et nécessite un temps de séjour compris entre 20 et 30 jours. Dans de telles conditions, la dégradation de la matière organique atteint généralement 40 à 50%. L'indice d'odeur est réduit de 70 à 80% et les germes pathogènes de 1 à 2 log.

Le conditionnement chimique à la chaux est, quant à lui, utilisé à différents stades du traitement des boues. La chaux (vive) permet, lors d'une réaction d'extinction, de piéger l'eau contenue dans les boues et d'augmenter fortement la siccité de celles-ci. En marge de cette augmentation en siccité, la chaux joue un rôle stabilisateur puissant par une alcalinisation très marquée du milieu permettant une destruction importante des agents pathogènes (hygiénisation) et des microorganismes responsables des fermentations anaérobies, ce qui conduit à une réduction des émissions de polluants soufrés. L'utilisation de la chaux permet généralement de réduire les germes fécaux de 4 à 5 log, ainsi que les flux de molécules soufrées (H₂S, mercaptans) de plus de 90%. Toutefois, l'élévation du pH, qui résulte d'une telle utilisation, provoque des dégagements d'ammoniac qui sont une source de nuisances olfactives. En outre, l'adjonction de chaux entraîne une augmentation de la masse des boues en proportion du taux de traitement de 30% au minimum. De plus, la stabilisation obtenue par la chaux est de durée assez courte, de 8 à 30 jours généralement suivant le taux de chaux ajouté.

Le traitement des boues par conditionnement thermique consiste à traiter celles-ci à une haute température (150-220°C) sous haute pression (15 à 20 bars), pendant 30 à 40 minutes de façon à les hygiéniser et à transformer partiellement la matière organique qu'elles contiennent en DCO soluble biodégradable (alcools, aldéhydes. acides gras volatils) et de façon à détruire les sels colloïdaux améliorant ainsi les étapes ultérieures d'épaississement et de déshydratation. Le principal inconvénient du procédé réside dans les nuisances olfactives générées par les molécules organiques résultantes telles que les butyraldéhydes, les composés butyriques, les valéraldéhydes..., et son coût énergétique très important qui fait que ce moyen est de moins en moins employé.

Parmi les procédés récemment développés cités ci-dessus, le procédé SYNOX consiste à traiter des boues brutes en plusieurs étapes comportant :
- un prétraitement de la boue incluant un abaissement du pH entre 2,5 et 3, une étape d'ajustement du taux de matière sèche à 2,5-3,5% en poids et un chauffage de la boue à une température de 40°C ;
- une oxydation de la boue par mise en contact avec de l'air ozoné à 5% durant 30 à 60 minutes, dans l'objectif de réduire sa concentration en matière organique; le prétraitement et l'oxydation étant menés dans un réacteur sous presssion (6 à 9 bars);
- un post-traitement facultatif à l'aide de nitrite de sodium ajouté dans l'objectif de réduire la concentration en virus.

Un tel procédé présente pour inconvénient principal d'être très complexe tant dans sa conception que dans sa mise en oeuvre. Il nécessite en effet au moins deux réacteurs et est excessivement coûteux d'un point de vue énergétique puisqu'il inclut des étapes de production d'O₃, de chauffage et de mise en pression.

Un autre procédé décrit dans la demande de brevet français n° 9310335 déposée au nom de la Demanderesse préconise quant à lui l'utilisation des oxydes d'azote gazeux pour stabiliser les boues.

Ce procédé consiste à transférer dans une boue liquide des oxydes d'azote (monoxyde d'azote, dioxyde d'azote, protoxyde d'azote,...) purs ou dilués en mélange avec un autre gaz et à assurer un temps de contact inférieure à 5 heures entre les boues et les oxydes d'azote.

Bien qu'il permette d'obtenir de très bonnes performances sur la désodorisation (réduction des odeurs : 3 à 4 log) et l'hygiénisation (réduction des germes : 4 log) des boues, en un temps de contact considérablement réduit (quelques heures) par rapport aux procédés de stabilisation des boues (20 à 30 jours lors des stabilisations anaérobies, environ 10 jours dans le cas des stabilisations aérobies thermophiles), ce dernier procédé mettant en oeuvre des oxydes d'azote présente néanmoins deux inconvénients.

D'une part, ce procédé implique la présence dans l'air en sortie réacteur d'un résiduel d'oxyde d'azote qui doit être éliminé, ce qui implique des traitements complémentaires assez coûteux.

D'autre part, ce procédé implique des coûts d'investissement relativement élevés, liés à la production de NOx, en particulier dans le cas d'une production in-situ, par oxydation thermique de l'ammoniaque.

En résumé, les inconvénients des procédés connus de stabilisation des boues déjà mis en oeuvre ou seulement encore en développement sont les suivants :
- temps de séjour très important (cas des digestions aérobies et anaérobies),
- production de gaz malodorants (digestion anaérobie entraînant l'émission de biogaz, chaulage produisant de l'ammoniaque, conditionnement thermique nécessitant des quantités importantes d'énergie et générant des acides gras volatils),
- augmentation du volume des boues (chaulage),
- durée de stabilisation limitée dans le temps,
- complexité importante et coûts de mise en oeuvre importants,
- performances sur la désodorisation et l'hygiénisation parfois médiocres.

De plus, ces procédés aboutissent fréquemment à une refermentation de la boue stabilisée au cours du temps et de son stockage sur les aires prévues à cet effet. Le tableau I ci-après résume les performances des principaux procédés de l'état de la technique.

**Tableau 1**

| | **Digestion anaérobie** | **Stabilisation aérobie** | **Chaulage** | **SYNOX** | **NOX** |
|---|---|---|---|---|---|
| Type de boue | épaissie | épaissie | déshydratée | brute | brute |
| Temps de séjour | 20 à 30 jours | 6 à 12 jours | - | 60' à qq heures | 4 h |
| variation m.volatiles | 45 à 50% | 35 à 40% | - | - | - |
| Désodorisation | H2S : 1-2 log | H2S : 2-3/4-5 log | H2S > 5 log | - | H2S = 5 log CH3SH = 4 log |
| Hygiénisation coliformes streptocoques spores de. clostridium | | T <30° /T >50° C | | | |
| | 1,5 log | 0,5 à 1/ 3 à 5 log | 3 log | 5 log | > 5-6 log |
| | 1,5 log | 0,5 à 1/ 3 à 5 log | 3 log | > 5-6 log | 3 log |
| | < 0.5 log | 3 à 5 log | - | > 4-5 log | 1 log |

L'objet de la présente invention est de proposer un nouveau procédé de traitement de boues ne présentant pas les nombreux inconvénients des procédés de l'état de la technique.

Plus précisément. un premier objectif de la présente invention est de fournir un procédé de stabilisation des boues permettant de réduire les nuisances olfactives, de façon réellement stable dans le temps et de détruire les germes pathogènes dans un temps très court par rapport aux procédés antérieurs .

Un autre objectif de la présente invention est de mettre en oeuvre un procédé simple incluant un nombre d'étapes réduit.

Un autre objectif de l'invention est de proposer un tel procédé impliquant des coûts réduits de mise en oeuvre notamment en ne mettant pas en oeuvre de traitement d'oxydation préalable, et en travaillant à température et à la pression atmosphérique.

Encore un autre objectif de l'invention est de permettre l'obtention de boues traitées pouvant être stockées à ciel ouvert, à l'abri de la pluie, sans générer de nuisances.

Egalement un objectif de l'invention est de présenter un tel procédé pouvant conduire à un fort abattement des métaux lourds, sources de pollution, dans les boues traitées.

Ces différents objectifs sont atteints grâce à l'invention qui concerne un procédé de stabilisation de boues ou d'autres déchets fortement chargés en matières organiques issus de filières d'épuration des effluents industriels et/ou urbains ou des filières des eaux de surface ou souterraine en vue de leur potabilisation, lesdites boues contenant au moins une partie de matières sèches essentiellement constituées de matières organiques fermentescibles, caractérisé en ce qu'il est mené à température ambiante et à la pression atmosphérique et en ce qu'il comprend une étape consistant à acidifier lesdites boues grâce à au moins un acide, à un pH compris entre 1,5 et 3,5, une étape consistant à ajouter au moins un sel de nitrite auxdites boues à une concentration comprise entre 10 et 500 mg N.NO₂/l, et en ce qu'il consiste à maintenir en contact le mélange constitué par lesdites boues, ledit acide et ledit sel de nitrite pendant une durée comprise entre 5 minutes et 12 heures, sous agitation permanente ou intermittente.

On notera que l'on entend par "autres déchets issus de filières d'épuration", les refus provenant des unités de dégrillage, les graisses provenant des pièges à graisses et autres dégraisseurs et les sables. Ces déchets présentent tous le points commun d'être fortement chargés en matières organiques et de générer des nuisances.

Selon l'invention, l'acidification et l'ajout de nitrite pourront être effectués soit en ligne, c'est-à dire au niveau d'une canalisation d'amenée des boues dans le réacteur utilisé pour effectuer le mélange et donc en aval de ce réacteur, soit directement dans le réacteur.

On notera que, préférentiellement pour éviter la formation de mousses et le dégagement d'oxydes d'azote, l'étape d'acidification sera effectuée avant l'ajout de nitrites.

L'objet de la présente invention repose donc en l'utilisation de la combinaison d'au moins un sel de nitrites et d'au moins un acide pour désodoriser et hygiéniser des boues d'origines diverses (boues urbaines de stations d'épuration, boues de curage, boues d'effluents industriels,...).

Il convient de noter que les acides et les nitrites, utilisés séparemment, ont un pouvoir désodorisant et hygiénisant très faible. C'est une des raisons pour lesquelles les nitrites ne sont mis en oeuvre dans le procédé SYNOX (marque déposée) qu'en guise de post-traitement d'appoint ne permettant d'éliminer que les germes qui n'ont pas été détruits par le traitement par de l'air ozoné qui est un oxydant très puissant.

On notera également que les nitrites ont déjà été utilisés pour traiter des gadoues minérales chargées en gypse (CaSO₄) provenant de laveurs de désulfuration en vue de réduire la teneur en bactéries sulfato-réductrices (qui sont des germes très fragiles) de ces résidus et ainsi de les désodoriser partiellement par réduction de l'émission d'H₂S uniquement.

De façon surprenante, il a été constaté que c'est l'association des deux éléments (acide + nitrite) qui possède un pouvoir désodorisant et hygiénisant très puissant, cela sans qu'aucun autre traitement préliminaire, en particulier sans qu'un traitement d'oxydation (ozonation comme cela est pratiqué par SYNOX ou oxyde d'azote dans le procédé décrit dans la demande de brevet français n° 9310335), ne soit nécessaire.

L'avantage principal du procédé selon l'invention est qu'il peut être mis en oeuvre à la pression atmosphérique et à température ambiante sans qu'une étape de prétraitement de la boue, telle que par exemple une étape d'oxydation, ne soit nécessaire

Par ailleurs, le procédé selon l'invention offre aussi l'avantage, par rapport aux autres procédés de l'état de la technique, de ne nécessiter que des temps de contact très faibles. de quelques minutes à quelques heures maximum.

Un autre avantage est qu'un tel procédé permet de ne pas diminuer la valeur agronomique de la boue par réduction de la matière organique (ce qui est le cas dans les traitements d'oxydation biologique tels que la digestion anaérobie ou dans les traitements d'oxydation chimique tels que l'ozonation). Au contraire, le traitement aux nitrites ne réduit pas les matières organiques et offre même une source d'azote supplémentaire directement assimilable par les végétaux. La valeur agronomique s'en trouve augmentée et la boue désodorisée et hygiénisée par le traitement acide aux nitrites selon l'invention peut être ensuite utilisée en agriculture soit sous forme liquide, soit sous forme solide.

Le procédé selon l'invention peut notamment être mis en oeuvre essentiellement selon deux variantes en fonction des objectifs recherchés.

Ainsi selon une première variante, le procédé est caractérisé en ce que ladite étape permettant d'acidifier lesdites boues est effectuée de façon à conférer auxdites boues un pH compris entre 2 et 3,5, en ce que ledit sel de nitrite est ajouté à une concentration comprise entre 10 et 75mg/l et en ce que ledit mélange est maintenu en contact pendant une durée comprise entre 5 minutes et 2 heures.

Préférentiellement, selon cette première variante, le pH est compris entre 2,9 et 3,1, la concentration en sel de nitrite est comprise entre 40 et 50 mg N.NO₂/l et la durée de contact est d'environ 30 minutes.

D'une manière générale, on notera qu'il a été constaté que si le pH utilisé était plus faible, la concentration en nitrite nécessaire diminuait également.

Selon cette première variante, les objectifs atteints sont les suivants :
- une désodorisation complète de la boue (inhibition de la formation de H₂S, CH₃SH, et des sulfures organiques),
- l'élimination des germes de contamination fécale (coliformes totaux et thermotolérants, streptocoques),
- l'élimination des oeufs de parasites (oeufs d'helminthes).

Ces objectifs atteints peuvent être maintenus pendant une durée de plusieurs semaines et jusqu'à un an.

Selon une deuxième variante du procédé de l'invention permettant une hygiénisation plus poussée des boues, celui-ci est caractérisé en ce que ladite étape permettant d'acidifier lesdites boues est effectuée de façon à conférer auxdites boues un pH compris entre 1,5 et 2,5, en ce que ledit sel de nitrite est ajouté à une concentration comprise entre 100 et 500 mg N.NO₂/l et en ce que ledit mélange est maintenu en contact pendant une durée comprise entre 2 heures et 12 heures.

Selon cette deuxième variante, le pH est préférentiellement compris entre 1,9 et 2,1, la concentration en sel de nitrites est comprise entre 300 et 400 mg N/l et ladite durée de contact est comprise entre 3 et 6 heures.

Selon cette deuxième variante de mise en oeuvre de l'invention, les objectifs suivant sont atteints :
- une désodorisation complète de la boue (inhibition de la formation de H₂S, CH₃SH, et des sulfures organiques),
- l'élimination des germes de contamination fécale (coliformes totaux et thermotolérants, streptocoques),
- l'élimination des oeufs de parasites (oeufs d'helminthe, ascaris, taenia, trichuris...), et de plus,
- élimination des bactéries sporulées (spores de clostridium,...),
- élimination des protozoaires (giardia, cryptosporidium,...).

Ces objectifs atteints dureront de plusieurs semaines et jusqu'à un an.

Avantageusement, le procédé peut inclure par ailleurs une étape complémentaire consistant à ajouter auxdites boues de l'acide sorbique et/ou un des ses dérivés, selon une concentration comprise entre 0,1 et 5 % en poids d'azote nitrique N.NO₂ ajouté. L'ajout d'au moins un composé de ce type permet de réduire si nécessaire, les taux de nitrites notamment dans le cas d'un traitement hygiénisant poussé tel que décrit ci-dessus. Ainsi, en ajoutant du sorbate à des taux de 0,1 à 5% en poids d'azote nitrique ajouté (de préférence entre 0,5 et 1%), le taux de nitrites peut être abaissé de 100 à 300 mg N/l avec des temps de contact similaire à ceux du traitement d'hygiénisation poussée tel que décrit ci-dessus.

Préférentiellement, ledit dérivé d'acide sorbique utilisé sera choisi dans le groupe constitué par l'acide ascorbique, les sorbates. les ascorbates et les érythorbates.

Il pourra aussi également être envisagé, pour augmenter l'action hygiénisante des nitrites, d'ajouter au procédé une étape complémentaire consistant à ajouter auxdites boues au moins un sel métallique, tel que par exemple du sulfate ferreux ou du chlorure ferrique.

Selon une variante de l'invention, le procédé comprendra également une étape supplémentaire de déshydratation desdites boues. Une telle étape pourra s'avérer nécessaire notamment lorsque l'on souhaitera valoriser les boues sous forme pâteuse en agriculture. Cette étape de déshydratation pourra être effectuée par tout moyen connu de l'homme de l'art et notamment par centrifugation ou bien filtration sur filtre-presse ou filtre à bandes.

Selon une variante particulièrement intéressante de l'invention, cette étape de déshydratation sera effectuée au pH acide de ladite étape d'acidification. En effet, une telle caractéristique permet de solubiliser les métaux lourds présents dans les boues et de les évacuer dans les filtrats ou centrats résultant de l'opération de déshydratation. Les boues déshydratées et épurées de leurs métaux lourds pourront ensuite être neutralisées à l'aide de tout agent basique connu de l'homme de l'art et préférentiellement à l'aide de chaux, vive ou éteinte, sous forme solide ou liquide.

Selon une autre variante, l'étape de déshydratation pourra aussi être effectuée après neutralisation des boues. Dans ce cas on pourra utiliser tout agent basique liquide ou solide connu de l'homme de l'art tel que préférentiellement, de la soude, de la potasse ou du lait de chaux.

On notera que, dans un cas comme dans l'autre, le pH de neutralisation dépendra des taux d'acides et de nitrites employés et du mode de stockage des boues .

Le stockage des boues traitées sous forme liquide ou pâteuse selon la présente invention peut s'effectuer aux conditions de traitement, c'est à dire à pH acide. Cependant, un autre avantage de l'invention réside dans le fait que le stockage peut également être réalisé à des pH plus élevés, proches de la neutralité, sans dégrader le caractère désodorisé et hygiénisé du produit.

D'une manière générale, les conditions ou modes de stockage des boues traitées selon l'invention seront déterminés par le pH de stockage des boues.

Si le mode de stockage est un stockage à l'air libre (à l'abri de la pluie), le pH de stockage pourra être celui du traitement. Si, le stockage a lieu dans un système fermé et étanche, le pH de stockage pourra être augmenté.

Plus précisément, dans le cadre d'un traitement d'hygiénisation tel que décrit ci-dessus à un pH compris entre 2 et 3,5 avec des concentrations de nitrite comprises entre 10 et 75 mg/l, le pH de stockage pourra être augmenté jusqu'à une valeur comprise entre 4 et 5 si celui-ci a lieu en système fermé (tel qu'un silo par exemple) ou jusqu'à un pH maximum de 3,5 si le stockage a lieu à l'air libre et à l'abri de la pluie. Dans le cadre d'un traitement d'hygiénisation poussé tel que décrit ci-dessus à un pH compris entre 1,5 et 2,5 avec des concentrations de nitrite comprises entre 100 et 500 mg/l, le pH de stockage en système fermé et étanche sera préférentiellement compris entre 2 et 6, et pour un système à l'air libre à l'abri de la pluie compris entre 2 et 4.

Par ailleurs, l'acide utilisé sera préférentiellement un acide fort. Cet acide fort pourra être choisi dans le groupe constitué par l'acide sulfurique, l'acide chlorhydrique et l'acide nitrique.

Egalement préférentiellement, ledit sel de nitrite utilisé sera un nitrite de métal alcalin.

Par la suite une installation pour la mise en oeuvre d'un tel procédé de stabilisation de boues est décrite. Elle est caractérisée en ce qu'elle inclut un réacteur de stabilisation fonctionnant à la pression atmosphérique et à température ambiante, des moyens de distribution d'au moins un acide et des moyens de distribution d'au moins un sel de nitrite dans ledit réacteur de stabilisation.

Préférentiellement, l'installation inclut également un réacteur de neutralisation prévu en aval dudit réacteur de stabilisation.

L'invention, ainsi que les différents avantages qu'elle présente seront plus facilement compris grâce à la description qui va suivre de différents mode de mise en oeuvre du procédé de stabilisation selon celle-ci en référence aux dessins dans lesquelles :
- la figure 1 représente un mode de réalisation d'une installation de stabilisation de boues pour la mise en oeuvre du procédé selon l'invention,

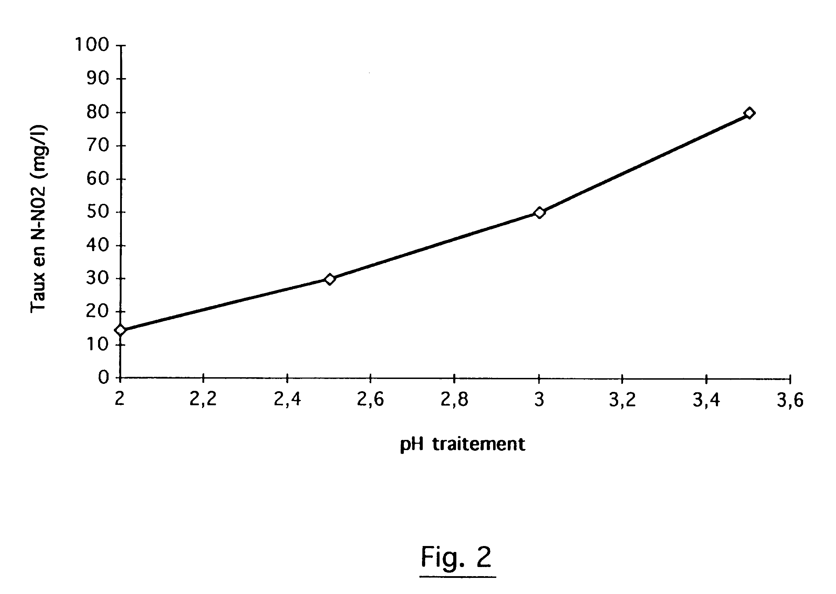

- la figure 2 est un graphique montrant l'évolution de la concentration d'azote nitnque en fonction du pH de traitement selon l'invention.

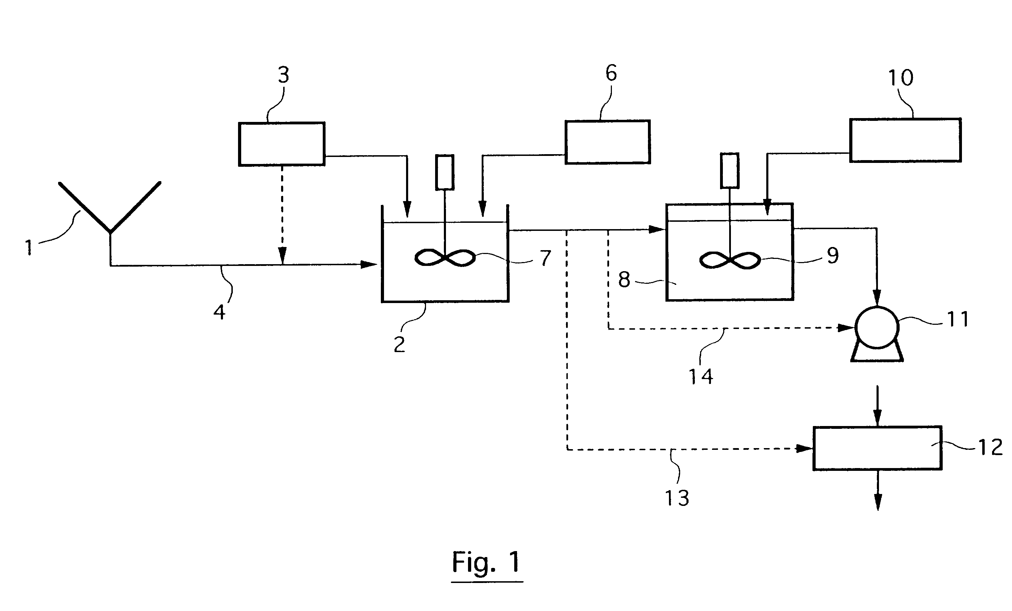

En référence à la figure 1, qui représente schématiquement une filière de traitement de boues de 3000 Equivalents Habitants, les boues épaissies à traiter présentant une teneur de 40g de matières sèches par litre sont soutirées d'un épaississeur 1 et alimentent un réacteur de stabilisation 2 à un débit moyen de 200 I/h, où est réalisée l'acidification et l'ajout de nitrites. A cet effet, des moyens 3 de distribution d'au moins un acide sont prévus au niveau de la canalisation 4 allant dudit épaississeur 1 audit réacteur de stabilisation 2 et des moyens 5 de distribution 6 d'au moins un sel de nitrites sont prévus de façon à distribuer les nitrites dans le réacteur de stabilisation. Celui-ci est par ailleurs muni de moyens d'agitation 7.

Selon le degré d'hygiénisation recherché, le pH , le taux de nitrite et le temps de contact des boues avec l'acide et le sel de nitrites seront ajustés en conséquence.

Au moins une partie des boues stabilisées est ensuite dirigée vers un réacteur de neutralisation 8 également pourvu d'un agitateur 9 et muni de moyens 10 de distribution d'un agent neutralisant. Les boues neutralisés sont ensuite déshydratées grâce à un déshydrateur 11 avant d'être stockée dans des moyens de stockage 12 étanche où elle pourra séjourner 9 à 10 mois avant d'être épandue sur des terres de labour.

Selon deux variantes du procédé pouvant être mis en oeuvre grâce à l'installation ici décrite, on notera que les boues traitées pourront aussi être stockée sous forme liquide ou encore subir une déshydratation pour être stockées sous forme pâteuse. A cet effet, une canalisation 13 allant directement de la sortie du réacteur de stabilisation 7 vers les moyens de stockage 12 des boues est prévue, ainsi qu'une canalisation 14 allant directement de la sortie du réacteur de stabilisation 7 vers les moyens de déshydratation 11.

L'installation décrite a été testée en mettant en oeuvre différentes variantes du procédé selon l'invention.

L' essai n ° 1 a été effectué avec les paramètres suivants : pH = 3, concentration en sels de nitrites : 50 mg N.NO₂/l, temps contact : 30 minutes

Les résultats obtenus sont synthétisés dans le tableau 2 suivant

**Tableau 2**

| | IO (H2S) | sulfato réductrices | coliformes totaux (nb/100 ml) | coliformes thermo (nb/100 ml) | strepto (nb/100 ml) | spores clostridium (nb/20 ml) | oeufs d'helminthes (nb/g MS) |
|---|---|---|---|---|---|---|---|
| teneur | < 10 | < 1 | < 1000 | < 1000 | < 1000 | ≈ 10⁶ à 10⁷ | 0,3 |
| rendt | > 4,5 log | > 5 log | > 4 log | > 4 log | > 4 log | 0 | 70% |

Ces résultats traduisent une excellente hygiénisation des boues sauf à l'encontre de micro-organismes particulièrement résistants comme les spores de clostridium.

L' essai n ° 2 a été effectué avec les paramètres suivants : pH = 2, concentration en sels de nitrites : 300 mg N.NO₂/l, temps contact : 6 heures. En ce qui concerne cet essai les conditions de stockage et les durées de stabilisation ont également été testés.

Les résultats obtenus sont synthétisés dans le tableau 3 suivant :

**Tableau 3**

| | IO (H2S) | sulfato réductrices | coliformes totaux (nb/100 ml) | coliformes thermo (nb/100 ml) | strepto (nb/100 ml) | spores clostridium (nb/20 ml) | oeufs d'helminthes (nb/g MS) |
|---|---|---|---|---|---|---|---|
| teneur | < 10 | <1 | < 1000 | < 1000 | < 1000 | < 100 | 0,1 |
| rendt | > 4,5 log | > 5 log | > 4 log | > 4 log | > 4 log | > 4 log | 90% |
| mode de stockage | | air libre abri pluie | air libre abri pluie | air libre abri pluie | fermé | fermé | fermé |
| pH stockage | | 2 | 4 | 6 | 2 | 4 | 6 |
| durée stabilisation hygiénisation | | > 4 mois | > 4 mois | > 2 mois | > 4 mois | > 4 mois | > 4 mois |

Outre une excellente hygiénisation, notamment à l'encontre de micro-organismes particulièrement résistants comme les spores de clostridium et les protozoaires, cet essai a permis de constater qu'il était possible de stocker les boues traitées pendant plusieurs mois à l'air libre à différents pH.

L' essai n ° 3 a été effectué avec les paramètres suivants : pH = 2, concentration en sels de nitrites : 150 mg N.NO₂/l, temps contact : 6 heures, concentration en sorbate : 1% en poids d'azote nitrique ajouté.

Les résultats obtenus sont synthétisés dans le tableau 4 suivant

**Tableau 4**

| | IO (H2S) | sulfato réductrices | coliformes totaux (nb/100 ml) | coliformes thermo (nb/100 ml) | strepto (nb/100 ml) | spores clostridium (nb/20 ml) | oeufs d'helminthes (nb/g MS) |
|---|---|---|---|---|---|---|---|
| teneur | < 10 | <1 | < 1000 | < 1000 | < 1000 | < 100 | 0,1 |
| rendt | > 4,5 log | > 5 log | > 4 log | > 4 log | > 4 log | > 4 log | 90% |

Les boues traitées ont ensuite été stockée dans différentes conditions et à différents pH. Les durées de stabilisation obtenues sont données dans le tableau 5 suivant:

**Tableau 5**

| mode de stockage | air libre abri pluie | air libre abri pluie | air libre abri pluie | fermé | fermé | fermé |
|---|---|---|---|---|---|---|
| pH stockage | 2 | 4 | 6 | 2 | 4 | 6 |
| durée stabilisation hygiénisation | > 4 mois | > 4 mois | 2 mois | > 4 mois | > 4 mois | > 4 mois |

L' essai n ° 4 a été effectué avec les paramètres suivants : pH = 2, concentration en sels de nitrites : 300 mg N.NO₂/l, temps contact : 6 heures, puis déshydratation à pH 2.

Les résultats obtenus sur l'abattement des métaux lourds contenus dans les boues traitées sont synthétisés dans le tableau 6 suivant :

**Tableau 6**

| | chrome | cuivre | nickel | zinc |
|---|---|---|---|---|
| Boue non traitée (mg/g MS) | 111 | 361 | 39 | 872 |
| Boue traitée (mg/gMS) | 42 | 342 | 21 | 319 |

Tous ces résultats montrent une hygiénisation très satisfaisante et très poussée@ des boues traitées, et dans le cadre de l'essai n°4, de surcroît, un abattement important des métaux lourds contenus dans ces boues.

Les modes de réalisation de l'invention ici décrits n'ont pas pour objet de réduire la portée de l'invention. En particulier, il pourra être envisagé d'utiliser des concentrations en azote nitrique, des temps de contact et des pH de travail différents de ceux-indiqués sans sortir du cadre de celle-ci. Il pourra aussi être envisagé de stocker les boues à des pH différents de ceux préconisés dans les exemples.

## Revendications

1. Procédé de stabilisation de boues ou d'autres déchets fortement chargés en matières organiques issus de filières d'épuration des effluents industriels et/ou urbains ou des filières des eaux de surface ou souterraine en vue de leur potabilisation, lesdites boues contenant au moins une partie de matières sèches essentiellement constituées de matières organiques fermentescibles, caractérisé en ce qu'il est mené à température ambiante et à la pression atmosphérique et en ce qu'il comprend une étape consistant à acidifier lesdites boues jusqu'à un pH compris entre 1,5 et 3,5 par ajout d'au moins un acide dans lesdites boues, une étape consistant à ajouter au moins un sel de nitrite auxdites boues à une concentration comprise entre 10 et 500 mg N.NO₂ /1 de boues, et en ce qu'il consiste à maintenir en contact le mélange constitué par lesdites boues, ledit acide et ledit sel de nitrite pendant une durée comprise entre 5 minutes et 12 heures, sous agitation permanente ou intermittente.

2. Procédé selon la revendication 1 caractérisé en ce que ladite étape d'acidification est effectuée avant ladite étape étape d'ajout de nitrite.

3. Procédé selon la revendication 1 ou 2 caractérisé en ce que ladite étape permettant d'acidifier lesdites boues est effectuée de façon à conférer auxdites boues un pH compris entre 2 et 3,5, en ce que ledit sel de nitrite est ajouté à une concentration comprise entre 10 et 75 mg N.NO₂/l de boues et en ce que ledit mélange est maintenu en contact pendant une durée comprise entre 5 minutes et 2 heures.

4. Procédé selon la revendication 3 caractérisé en ce que ladite concentration en sel de nitrite est comprise entre 40 et 50 mg N.NO₂/l de boues et en ce que ledit pH est compris entre 2,9 et 3,1 et ladite durée de contact est d'environ 30 minutes.

5. Procédé selon la revendication 1 ou 2 caractérisé en ce que ladite étape permettant d'acidifier lesdites boues est effectuée de façon à conférer auxdites boues un pH compris entre 1,5 et 2,5, en ce que ledit sel de nitrite est ajouté à une concentration comprise entre 100 et 500 mg N.NO₂/l de boues et en ce que ledit mélange est maintenu en contact pendant une durée comprise entre 2 heures et 12 heures.

6. Procédé selon la revendication 5 caractérisé en ce que ladite étape permettant d'acidifier lesdites boues est effectuée de façon à conférer auxdites boues un pH compris entre 1,9 et 2,1, le sel de nitrite est ajouté à raison de 300 à 400 mg N.NO₂/l de boues, et ladite durée de contact est comprise entre 3 et 6 heures .

7. Procédé selon l'une des revendications 1 à 6 caractérisé en ce qu'il inclut une étape complémentaire consistant à ajouter auxdites boues de l'acide sorbique et/ou un des ses dérivés à une concentration comprise entre 0,1 et 5 % de poids d'azote nitrique N.NO₂ ajouté.

8. Procédé selon la revendication 7 caractérisé en ce que l'acide sorbique et/ou un des ses dérivés est ajoutée à une concentration comprises entre 0,5 et 1 % de poids d'azote nitrique N.NO₂ ajouté.

9. Procédé selon la revendication 7 ou 8 caractérisé en ce que ledit dérivé d'acide sorbique est choisi dans le groupe constitué par l'acide ascorbique, les sorbates, les ascorbates et les érythorbates.

10. Procédé selon l'une des revendications 1 à 9 caractérisé en ce qu'il inclut une étape complémentaire consistant à ajouter auxdites boues au moins un sel métallique.

11. Procédé selon l'une des revendications 1 à 10 caractérisé en ce qu'il comprend une étape supplémentaire de déshydratation desdites boues.

12. Procédé selon l'une des revendications 1 à 11 caractérisé en ce qu'il inclut une étape de neutralisation visant à augmenter le pH desdites boues à l'aide d'un agent neutralisant visant à augmenter le pH des boues acidifiées.

13. Procédé selon les revendications 11 et 12 caractérisé en ce que ladite étape de déshydratation est effectuée au pH acide de traitement et en ce que ladite étape de neutralisation est effectuée après ladite étape de déshydratation.

14. Procédé selon les revendications 11 et 12 caractérisé en ce que ladite étape de neutralisation est effectuée avant ladite étape de déshydratation.

15. Procédé selon la revendication 3 caractérisé en ce qu'il comprend une étape consistant à augmenter le pH des boues traitées avant de les stocker, jusqu'à une valeur d'au maximum 3,5 si le stockage a lieu à l'air libre à l'abri de la pluie et d'au maximum 5 si le stockage à lieu en système fermé.

16. Procédé selon la revendication 5 caractérisé en ce qu'il comprend une étape consistant à augmenter le pH des boues traitées avant de les stocker, jusqu'à une valeur d'au maximum 4 si le stockage a lieu à l'air libre à l'abri de la pluie et d'au maximum 6 si le stockage a lieu en système fermé.

17. Procédé selon l'une des revendication 1 à 16 caractérisé en ce que ledit acide est un acide fort.

18. Procédé selon l'une des revendications 1 à 17 caractérisé en ce que ledit sel de nitrite est un nitrite de métal alcalin.

## Patentansprüche

1. Verfahren zum Stabilisieren von Schlämmen oder anderen stark mit organischen Stoffen belasteten Abfällen aus industriellen und/oder städtischen Abwasserleitungen, oder aus oberflächlichen oder unterirdischen Wasseradern zum Zweck der Trinkwassergewinnung, wobei die Schlämme mindestens einen Anteil an trockenen Stoffen enthalten, die im wesentlichen aus fermentierbaren organischen Stoffen bestehen,
dadurch gekennzeichnet, daß es bei Umgebungstemperatur und bei Atmosphärendruck abläuft, und daß es umfaßt: einen Schritt, welcher im Säuern der Schlämme bis zu einem pH Wert zwischen 1,5 und 3,5 besteht, durch Zugabe von mindestens einer Säure zu den Schlämmen, und einen Schritt, der in der Zugabe von mindestens einem Nitritsalz zu den Schlämmen mit einer Konzentration zwischen 10 und 500 mg N.NO₂/l Schlamm besteht und, daß die Mischung aus den Schlämmen, der Säure und dem Nitrit während einer Zeitdauer von 5 Minuten bis zu 12 Stunden unter ständigem oder unterbrochenem Rühren in Kontakt gehalten wird.

2. Verfahren nach Anspruch 1,
dadurch gekennzeichnet, daß der Säuerungsschritt vor der Nitritzugabe erfolgt.

3. Verfahren gemäß Anspruch 1 oder 2,
dadurch gekennzeichnet, daß der Säuerungsschritt der Schlämme so erfolgt, daß die Schlämme einen pH-Wert zwischen 2 und 3,5 erhalten und, daß das Nitritsalz in einer Konzentration zwischen 10 und 75 mg N.NO₂/l Schlämme zugegeben wird und, daß das Gemisch während einer Zeitdauer von 5 Minuten und 2 Stunden in Kontakt gehalten wird.

4. Verfahren nach Anspruch 3,
dadurch gekennzeichnet, daß die Nitritsalzkonzentration zwischen 40 und 50 mg N.NO₂/l Schlämme beträgt und, daß der pH-Wert zwischen 2,9 und 3,1 liegt, wobei die Kontaktzeit etwa 30 Minuten beträgt.

5. Verfahren nach Anspruch 1 oder 2,
dadurch gekennzeichnet, daß der Säuerungsschritt der Schlämme so ausgeführt wird, daß die Schlämme einen pH-Wert zwischen 1,5 und 2,5 erreichen und, daß das Nitritsalz mit einer Konzentration zwischen 100 und 500 mg N.NO₂/l Schlamm zugefügt wird und, daß das Gemisch während einer Zeitdauer zwischen 2 und 12 Stunden in Kontakt gehalten wird.

6. Verfahren gemäß Anspruch 5,
dadurch gekennzeichnet, daß der Säuerungsschritt so erfolgt, daß die Schlämme einen pH-Wert zwischen 1,9 und 2,1 erreichen, wobei das Nitritsalz mit einer Konzentration von 300 bis 400 mg N.NO₂/l Schlamm zugefügt wird und, daß die Kontaktzeit 3 bis 6 Stunden dauert.

7. Verfahren nach einem der Ansprüche 1 bis 6,
dadurch gekennzeichnet, daß es einen zusätzlichen Schritt umfaßt, der darin besteht, den Schlämmen Sorbinsäure und/oder ein Derivat davon zuzugeben, bei einer Konzentration zwischen 0,1 und 5 Gewichtsprozent an hinzugefügten N.NO₂ salpetersaurem Stickstoff.

8. Verfahren gemäß Anspruch 7,
dadurch gekennzeichnet, daß die Sorbinsäure und/oder einer ihrer Derivate mit einer Konzentration zwischen 0,5 und 1 Gewichtsprozent an hinzugefügten N.NO₂ salpetersaurem Stickstoff zugegeben wird.

9. Verfahren gemäß Anspruch 7 oder 8,
dadurch gekennzeichnet, daß das Sorbinsäurederivat aus der Gruppe gewählt wird, die aus der Ascorbinsäure, den Sorbaten, den Ascorbaten und den Erythorbaten gebildet wird.

10. Verfahren nach einem der Ansprüche 1 bis 9,
dadurch gekennzeichnet, daß es einen zusätzlichen Schritt umfaßt, der darin besteht, den Schlämmen mindestens einen Metallsalz zuzugeben.

11. Verfahren nach einem der Ansprüche 1 bis 10,
dadurch gekennzeichnet, daß es einen zusätzlichen Trocknungsschritt der Schlämme umfaßt.

12. Verfahren nach einem der Ansprüche 1 bis 11,
dadurch gekennzeichnet, daß es einen Neutralisierungsschritt umfaßt, der den pH-Wert der Schlämme mit Hilfe eines neutralisierenden Agenten erhöhen soll, welcher den pH-Wert der gesäuerten Schlämme erhöhen soll.

13. Verfahren nach den Ansprüchen 11 und 12,
dadurch gekennzeichnet, daß der Trocknungsschritt beim sauren Verarbeitungs-pH-Wert erfolgt und, daß der Neutralisierungsschritt nach dem Trocknungsschritt erfolgt.

14. Verfahren nach den Ansprüchen 11 und 12,
dadurch gekennzeichnet, daß der Neutralisierungsschritt vor dem Trocknungsschritt erfolgt.

15. Verfahren nach Anspruch 3,
dadurch gekennzeichnet, daß es einen Schritt zum Erhöhen des pH-Wertes der verarbeiteten Schlämme vor ihrer Lagerung umfaßt, bis zu einem Wert von mindestens 3,5, wenn die Lagerung regengeschützt im Freien erfolgt und von höchstens 5, wenn die Lagerung in einem geschlossenem System erfolgt.

16. Verfahren nach Anspruch 5,
dadurch gekennzeichnet, daß es einen Schritt zum Erhöhen des pH-Wertes der verarbeiteten Schlämme vor ihrer Lagerung umfaßt, bis zu einem Höchstwert von 4, falls die Lagerung regengeschützt im Freien erfolgt und von höchstens 6, wenn die Lagerung in einem geschlossenem System erfolgt.

17. Verfahren nach einem der Ansprüche 1 bis 16,
dadurch gekennzeichnet, daß es sich bei der Säure um eine starke Säure handelt.

18. Verfahren nach einem der Ansprüche 1 bis 17,
dadurch gekennzeichnet, daß es sich beim Nitritsalz um ein alkalisches Metallnitrit handelt.

## Claims

1. Method for the stabilisation of sludge or other waste with a high organic matter content derived from treatment operations for the purification of industrial and/or urban effluents or from treatment operations for surface water or groundwater with a view to rendering these drinkable, the said sludge containing at least a solids fraction essentially made up of fermentable organic matter, characterised in that it is carried out at ambient temperature and at atmospheric pressure and in that it comprises a step consisting in acidifying the said sludge to a pH of between 1.5 and 3.5 by adding at least one acid to the said sludge, a step consisting in adding at least one nitrite salt to the said sludge in a concentration of between 10 and 500 mg N.NO₂/l sludge, and in that it consists in keeping the mixture made up of the said sludge, the said acid and the said nitrite salt in contact for a period of between 5 minutes and 12 hours, with continuous or intermittent stirring.

2. Method according to Claim 1, characterised in that the said acidification step is carried out before the said nitrite addition step step (sic).

3. Method according to Claim 1 or 2, characterised in that the said step enabling the said sludge to be acidified is carried out so as to confer a pH of between 2 and 3.5 on the said sludge and in that the said nitrite salt is added in a concentration of between 10 and 75 mg N.NO₂/l sludge and in that the said mixture is kept in contact for a period of between 5 minutes and 2 hours.

4. Method according to Claim 3, characterised in that the said nitrite salt concentration is between 40 and 50 mg N.NO₂/l sludge and in that the said pH is between 2.9 and 3.1 and the said contact period is approximately 30 minutes.

5. Method according to Claim 1 or 2, characterised in that the said step enabling the said sludge to be acidified is carried out so as to confer a pH of between 1.5 and 2.5 on the said sludge and in that the said nitrite salt is added in a concentration of between 100 and 500 mg N.NO₂/l sludge and in that the said mixture is kept in contact for a period of between 2 hours and 12 hours.

6. Method according to Claim 5, characterised in that the said step enabling the said sludge to be acidified is carried out so as to confer a pH of between 1.9 and 2.1 on the said sludge, the nitrite salt is added in an amount of 300 to 400 mg N.NO₂/l sludge and in that the said contact period is between 3 and 6 hours.

7. Method according to one of Claims 1 to 6, characterised in that it includes a complementary step consisting in adding sorbic acid and/or one of its derivatives to the said sludge in a concentration of between 0.1 and 5 % by weight of nitric nitrogen N.NO₂ added.

8. Method according to Claim 7, characterised in that the sorbic acid and/or one of its derivatives is added in a concentration of between 0.5 and 1 % by weight of nitric nitrogen N.NO₂ added.

9. Method according to Claim 7 or 8, characterised in that the said sorbic acid derivative is chosen from the group comprising ascorbic acid, the sorbates, the ascorbates and the erythorbates.

10. Method according to one of Claims 1 to 9, characterised in that it includes a complementary step consisting in adding at least one metal salt to the said sludge.

11. Method according to one of Claims 1 to 10, characterised in that it comprises a supplementary step for dehydration of the said sludge.

12. Method according to one of Claims 1 to 11, characterised in that it includes a neutralisation step with a view to raising the pH of the said sludge with the aid of a neutralising agent with a view to raising the pH of the acidified sludge.

13. Method according to Claims 11 and 12, characterised in that the said dehydration step is carried out at the acid pH used for treatment and in that the said neutralisation step is carried out after the said dehydration step.

14. Method according to Claims 11 and 12, characterised in that the said neutralisation step is carried out before the said dehydration step.

15. Method according to Claim 3, characterised in that it comprises a step consisting in raising the pH of the treated sludge before it is stored, up to a value of at most 3.5 if storage takes place in the open air with protection from the rain and up to at most 5 if the storage takes place in a closed system.

16. Method according to Claim 5, characterised in that it comprises a step consisting in raising the pH of the treated sludge before it is stored, up to a value of at most 4 if the storage takes place in the open air with protection from the rain and up to at most 6 if the storage takes place in a closed system.

17. Method according to one of Claim (sic) 1 to 16, characterised in that the said acid is a strong acid.

18. Method according to one of Claims 1 to 17, characterised in that the said nitrite salt is an alkali metal nitrite.
